Europäisches Patentamt

European Patent Office

Office européen des brevets

(11) Publication number: **0 345 845**
**A2**

(12) **EUROPEAN PATENT APPLICATION**

(21) Application number: **89201267.5**

(22) Date of filing: **19.05.89**

(51) Int. Cl.⁴: **H04L 9/00**

(30) Priority: **01.06.88 IT 2082288**

(43) Date of publication of application:
**13.12.89 Bulletin 89/50**

(84) Designated Contracting States:
**AT BE CH DE ES FR GB GR IT LI NL SE**

(71) Applicant: **SIEMENS TELECOMUNICAZIONI S.P.A.**
**SS. 11 Padana Superiore Km. 158**
**I-20060 Cassina de Pecchi (Milano)(IT)**

(72) Inventor: **Butti, Adriano**
**Via Resegone, 5**
**I-20040 Carnate (Milano)(IT)**

(74) Representative: **Mittler, Enrico et al**
**c/o Marchi & Mittler s.r.l. Viale Lombardia, 20**
**I-20131 Milano(IT)**

(54) **Enciphering and deciphering device for high bit-rate transmission systems.**

(57) The enciphering device generates an enciphered signal (CF) with high bit-rate from the module-2 sum of the signal to be transmitted (TR) with a pseudorandom sequence of bits (PS) obtained by supplying a pseudorandom generator (5) with keys renewed at brief time intervals. The keys are in turn enciphered and encoded (7, 8) to form an auxiliary channel (PC) with low bit-rate which is aligned with the enciphered signal (CF) to form frames.

FIG. 2

## Enciphering and deciphering device for high bit-rate transmission systems

The present invention relates to the field of encoding numerical signals and more particularly concerns a ciphering and deciphering device for high bit-rate transmission systems.

Modern high-capacity transmission systems employ numerical techniques which allow aggregation on the same transmission means (e.g. radio link, coaxial cable or optical fiber) of large quantites of information of varied nature such as for example telephony, telegraphy, data, videoconference, television or any other type of signal which can be encoded in numerical form.

One of the possible requirememnts of the transmission system is that it ensure secrecy of the information handled and transmitted. This requirement has always been basically important, e.g. in the communications of diplomatic missions, while it is becoming steadily more important in private use systems, in particular for the processing of financial or industrial information.

In general secrecy of the information is provided by signal processing called enciphering which makes the signal incomprehensible to anyone attempting to intercept it and wrongly take possession of it.

The opposite operation, which again makes the message clear and is called deciphering, is possible only for the legitimate addressee of the information who has the deciphering key supplied him through a channel considered absolutely safe, in general consisting of transportation thereof performed by an absolutely trustworthy person.

Numerous enciphering techniques are known which however require generally rather complex processing performed using dedicated circuits or microprocessors. The processing complexity makes difficult high bit-rate operation unless parallel processing is carried out with the consequent increase in cost and consumption as well as reduced reliability.

An example of an enciphering system which is enjoying wide acceptance for data at not very high bit-rates is called DES (Data Encryption Standard) conceived by IBM and now adopted as standard by the National Bureau of Standards, United States Department of Commerce, which describes it for example in the publication FIPS PUB 74 dated 1 April 1981, 'Guidelines for Implementing and Using the NBS Data Encryption Standard'. The DES system is also described in the book by A. Sgarro 'Crittografia - Tecniche di protezione dei dati riservati' page 49 and foll. published by F. Muzzio in 1986.

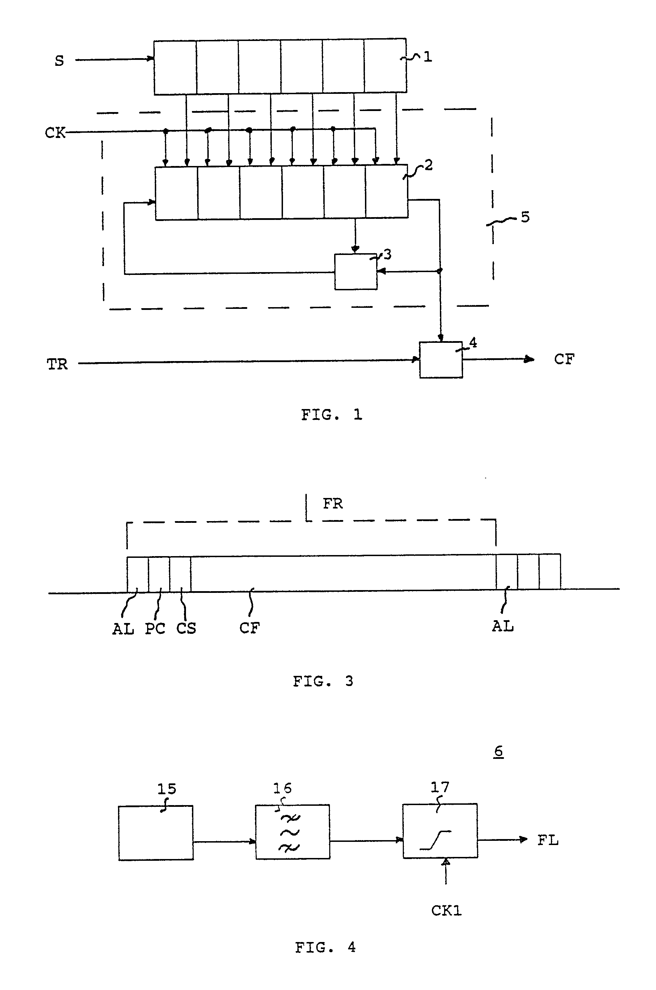

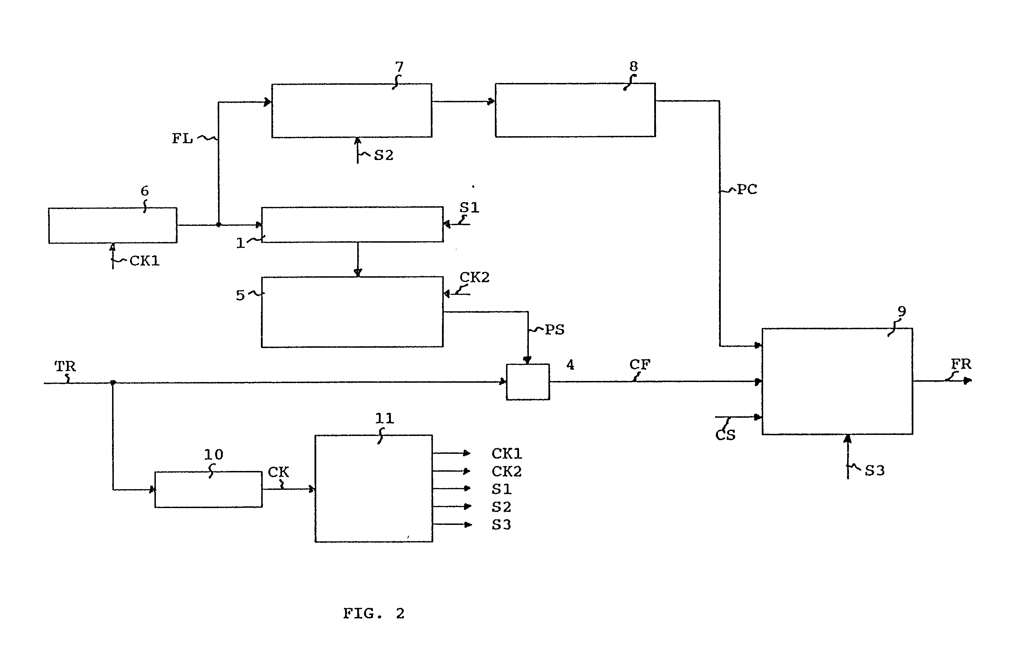

With reference to FIG. 1 there follows the description of the circuitry of the enciphering section of an enciphering and deciphering system of known type suitable for high bit-rates but with low unauthorized deciphering resistance. This enciphering system is also described in the abovementioned book by A. Sgarro.

The enciphering section consists of a memory 1 with a capacity of N bits in which is entered a key word employed for initiallizing a pseudorandom generator of N bit word indicated in broken lines with reference number 5 in the figure.

The pseudorandom generator 5 consists of a sliding register 2 with N positions synchronized by the clock signal CK and fed back by a module-2 adder. The latter consists of an EX-OR gate indicated by reference number 3 in the figures and which receives the outputs of two cells of the register 2 and whose output is returned to the serial input of the register. In the presence of a synchronism signal S the key in the memory 1 is transferred in parallel into the register 2.

The signal at the output of the sliding register 2 is still module-2 added to the signal to be transmitted TR by another EX-OR gate 4 at whose output is obtained the enciphered signal CF to be transmitted.

In the nonlimiting example shown in FIG. 1 $N = 6$ has been selected. It can be shown that if for $N = 6$ the inputs of the EX-OR gate 3 are supplied with the outputs of the positions $n = 0$, 1 of the register 2 (where $n = (0,1,....N-1)$ and $n = 0$ being the output position of the register), there is obtained a pseudorandom generator with maximum period, i.e. capable of generating $2^N - 1$ different random words provided the sequence of all logical zeros is not chosen as the key.

Pseudo-random generators with maximum period with any value of N and hence sequences of random words as long as desired and high bit-rates may be obtained.

The deciphering section, not shown in the figures, is identical with the enciphering section and its operation to obtain a deciphered signal DF is readily deducible from the properties of the module-2 sum. Indeed the two pseudorandom enciphering and deciphering generators supply the same output signal provided they are initiallized at the same instant and with the same key.

But the enciphering system just described has a serious drawback which makes it useless in practice. It can be proven that, by knowing any one message in plaintext and the corresponding enciphered message with a length of 2N bits it is possible to find the key by solving a system of equations.

The above problems are solved by the present invention of an enciphering and deciphering device for high-speed transmission systems which, while using an enciphering system of the type described in FIG. 1, calls for changing the keys in the memory with high frequency and transmitting them via an associated low bit-rate channel in order to ensure synchronism of the entry of the keys in the transmitting and receiving terminals. It also calls for enciphering the keys themselves to ensure secrecy and to use a protection system against bit errors entered from the transmission channel. Indeed it is evident that the loss of a key involves the loss of the received signal until a new key is sent.

The particular object of the present invention is an enciphering and deciphering device for high-speed numerical signals including both for enciphering and deciphering a pseudorandom generator of sequences of pseudorandom words of N bits initiallized with an N bit key, said pseudorandom words being module-2 added to a signal to be enciphered or deciphered, obtaining an enciphered or deciphered signal, characterized in that for enciphering it also includes (a) a generator of random keys supplied to said pseudorandom generator at a first frequency to substitute said N bit key, (b) an enciphering circuit of said random keys, (c) a circuit for coding the enciphered random key supplied by said enciphering circuit to the output of said coding circuit for channel error correction, there being present enciphered and encoded random keys, and (d) a multiplexer circuit which organizes in a frame at least said enciphered and encoded random keys constituting an associated channel with low bit-rate, and said enciphered signal, obtaining frames of transmission signals.

Other objects and advantages of the present invention will become clear from the detailed description below of a nonlimiting example of the realization thereof and from the annexed drawings wherein -

FIG. 1 shows a block diagram of a known enciphering device previously described,

FIG. 2 shows a block diagram of the enciphering device which is the object of the invention,

FIG. 3 shows an example of the frame structure for the transmission of the enciphered signal,

FIG. 4 shows an example of the realization of the random key generator 6 of FIG. 2, and

FIG. 5 shows a block diagram of the enciphering device which is the object of the invention.

With reference to FIG. 2, reference numbers 1, 4 and 5 indicate the same blocks as shown in FIG. 1.

Reference number 6 indicates a random key generator which, at a clock frequency CK1, generates a purely random bit sequence FL supplied to the memory 1 and to an enciphering circuit 7.

At a frequency determined by that of the synchronism signal S1 the memory 1 memorizes N bits of the sequence FL, then composing purely random words of N bits which constitute the keys supplied to the pseudorandom generator 5. The latter as described above with reference to FIG. 1 generates at a clock frequency CK2 a pseudorandom bit sequence PS which is added bit by bit in the module-2 adder 4 to the transmitter signal TR, obtaining an enciphered signal CF.

The enciphering circuit 7 is capable of enciphering the random keys which it receives from the generator 6 using another key. It receives from the generator 6 the random sequence of bits FL and, synchronized by the synchronism signal S2, memorizes sections N bits long of said sequence interpreting them as keys. Said sections are the same ones memorized in the memory 1.

The enciphering circuit 7 may be realized by conventional techniques, e.g. a structure such as that of the above mentioned DES, because the bit-rate characteristic of the random keys at its input is not high (a few tens of kbit/s maximum) in relation to that of the signal to be transmitted TR.

Reference number 8 indicates an encoding circuit of the Forward Error Corrector type for correction of channel errors which might be generated in the enciphered random keys supplied by the device 7. The circuit 8 may be of any known type to activate for example a convolutional coding with 1/2 rate and a decoding of the 'hard decision' or 'Viterbi' types, such as for example the one described in the article by J. L. Massey 'The How and Why of Channel Coding', International Zurich Seminar, 7 March 1984.

The encoding circuit 8 supplies an output of a sequence of bits which constitutes encoded enciphered random words PC.

Reference number 9 indicates a circuit of known type which has the function of multiplexing by the bit insertion technique the signals to be transmitted with a frame alignment word AL generated within it and forming the transmission signal frames FR. The signals to be transmitted consist of the high bit-rate enciphered signal CF, the encoded and enciphered random words PC and any service and/or remote unciphered monitoring channels with low bit-rate.

The frame FR created may have a length on the order of a thousand bits. It follows that it is also necessary to create a synchronism for the entry of the words PC. This can be obtained by creating a superframe of a length which is a multiple of the frame length and a superframe synchronism S3 to be supplied to the circuit 9.

Reference number 10 indicates a clock signal extractor circuit of known type which takes a clock frequency CK from the signal to be transmitted TR which it receives at the input.

Reference number 11 indicates a generator of clock and synchronism signals which, on the basis of the clock frequency CK, generates the signals CK1, CK2, S1, S2 and S3. Realization of the circuit 11 presents no problem for those skilled in the art when the frame and superframe structures, the value of N and the various delays introduced from the circuits 1, 5, 7 and 8 have been determined so as to correctly align in time the signals at the input of the circuit 9.

FIG. 3 shows an example of a frame structure FR made up of the fields AL, which is the frame alignment word necessary to permit the deciphering section to distinguish between the different data transmitted, and then the words PC, CS and CF defined above.

FIG. 4 shows an example of the realization of the random key generator circuit 6 of FIG. 2.

Reference number 15 indicates a white-noise generator, e.g. consisting of a wide band amplifier, whose output is supplied to a band-pass filter 16 at whose output is obtained a white noise with limited band.

Reference number 17 indicates a threshhold circuit which takes a function which is a sign of the white noise with limited band, sampling it at the clock frequency CK1 and obtaining the bit stream FL. Said bit stream is purely random on the one condition that the clock frequency CK1 not be too high compared with the maximum output frequency of the filter 16.

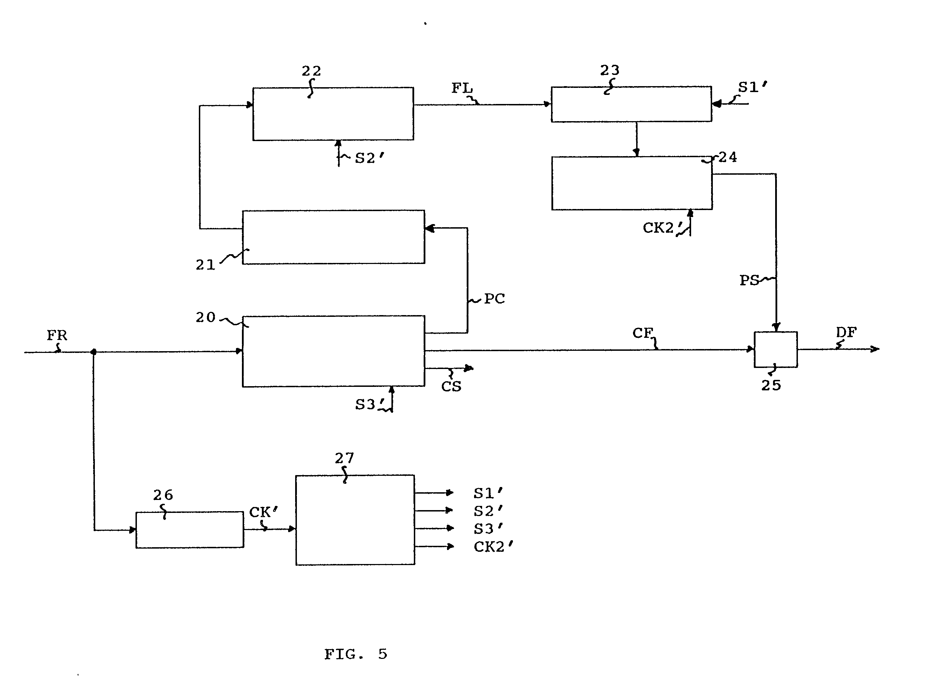

FIG. 5 shows an example of a realization of the deciphering structure section which is complementary to that of ciphering.

The frames FR are supplied to an auxiliary channel extraction circuit 20 with a structure complementary to that of the circuit 9 shown in FIG. 2 which, being synchronized by the synchronism signal S3', identifies the alignment words AL in the frames and separates among them the various channels received, supplying to the outputs the enciphered signal CF, the encoded and enciphered random words PC and the unenciphered service and/or remote monitoring channels CS.

Reference number 21 indicates a corrector circuit for the bit errors entered from the transmission channel on the bit stream of the words PC which it receives from the circuit 20.

Reference number 22 indicates a deciphering device for the decoded words, which it receives from the circuit 21, identified on the basis of the synchronism signal S2'. The device 22 outputs the random keys FL which were generated by the generator 6 of FIG. 2.

The circuits 21 and 22 have a structure complementary to that of the circuits 8 and 7 respectively of FIG. 2.

Reference numbers 23, 24 and 25 indicate circuits analogous to the memory 1, the pseudorandom generator 5 and the adder 4 of FIG. 2 respectively. The circuits 23 and 24 are synchronized by the synchronism signal S1' and clock signal CK2 respectively.

The random keys FL are memorized in the memory 23 and then supplied to the pseudorandom generator 24 which supplies to the module-2 adder 25 the pseudorandom signal PS which, added to the enciphered signal CF, supplies at the output the deciphered signal DF which is the same as the signal to be transmitted TR of FIG.2.

Thus the known property of the module-2 binary sum is utilized so that by adding the same signal (PS) twice to a binary signal (TR in this case), the original signal (TR = DF) is again obtained.

Reference numbers 26 and 27 indicate two circuits with structures analogous to that of the clock extractor 10 and of the clock and synchronism generator 11 of FIG. 2 respectively.

The extractor 26 takes from the stream of the input frames FR a clock signal CK' supplied to the clock and synchronism generator 27 which generates the signals CK2', S1', S2' and S3'.

Realization of the circuits 26 and 27 does not represent a problem for those skilled in the art when the structure of the circuits 10 and 11 of FIG. 2, of the frames and superframes, the value of N and the various delays entered from the circuits of FIG. 5 are known so as to correctly align in time the input signals of the adder 25.

The description given makes clear the advantages of the deciphering device which is the object of the present invention. In particular it is possible to reach high transmission speeds by using a simple enciphering circuit structure of the high bit-rate signal and at the same time a standard enciphering structure for the keys transmitted on an auxiliary channel with low bit-rate.

By further enciphering and codifying the keys high levels of secrecy and protection against channel errors are achieved.

**Claims**

1. Device for enciphering and deciphering numerical signals at high speed comprising both for enciphering and deciphering a pseudorandom generator (5, 24) of pseudorandom word sequences (PS) of N bits initiallized by a key of N bits, said pseudorandom words (PS) being module-2 added to a signal to be enciphered (TR) or deciphered (CF), obtaining an enciphered signal (CF) or a deciphered signal (DF), characterized in that for enciphering it also comprises (a) a generator of random keys supplied to said pseudorandom generator at a first frequency to substitute said key of N bits, (b) an enciphering circuit of said random keys, (c) a circuit for encoding the enciphered random key supplied by said enciphering circuit for channel error correction to the output of said coding circuit there being present enciphered and encoded random keys, and (d) a multiplexing circuit which organizes in a frame at least said enciphered and encoded random keys constituting an associated channel with low bit-rate, and said enciphered signal, obtaining transmission signal frames.

2. Enciphering and deciphering device as in claim 1 characterized in that said pseudorandom generator (5) has maximum period.

3. Enciphering and deciphering device as in claim 1 characterized in that for enciphering said multiplexer circuit (9) organizes in said transmission signal frames (FR) service and/or remote monitoring channels (CS) and a frame alignment word (AL).

4. Enciphering and deciphering device as in claims 1 or 3 characterized in that it also comprises circuits (10, 11) for extraction of a clock frequency (CK) from said signal to be enciphered (TR) and for the generation of synchronism signals for said enciphering device.

5. Enciphering and deciphering device as in claim 1 characterized in that said random key generator (6) consists of a white noise generator with limited band (15, 16) at whose input is connected a threshold circuit (17) which samples the input at a clock frequency (CK1) taking sign function of bits in sequence which constitute said random keys (FL).

6. Enciphering and deciphering device as in claim 1 characterized in that for deciphering it also comprises (a) a demultiplexer circuit (20) which identifies and separates in said transmission signal frames (FR) said encoded and enciphered random keys (PC) and said enciphered signal (CF), (b) a decodifying circuit (21) complementary to said codifying circuit (8) for said encoded and enciphered random keys (PC), and (c) a deciphering circuit (22) complementary to said enciphering circuit which receives the output of said decodifying circuit and obtains said random keys (FL) supplied to the pseudorandom generator (24).

7. Enciphering and deciphering device as in claims 1 or 6 characterized in that said pseudorandom generator (5, 24) has maximum period capable of generating $2^N - 1$ different pseudorandom words (PS).

8. Enciphering and deciphering device as in claims 1 or 6 characterized in that it also includes a first memory (1, 23) which temporarily memorizes said random keys (FL) and supplies them to said pseudorandom generator (5, 24) at said first frequency (S1).

FIG. 1

FIG. 3

FIG. 4

FIG. 2

EP 0 345 845 A2

FIG. 5